# FASCICULE DE BREVET EUROPEEN

(11) **EP 2 083 188 B1**
(45) Date de publication et mention de la délivrance du brevet: **21.09.2011**
(21) Numéro de dépôt: 09151037.0
(22) Date de dépôt: 21.01.2009
(51) Int. Cl.: F16D 65/14, F16D 65/20

(54) **Dispositif de frein à disque pour maintenir arrêté un véhicule en stationnement**
Scheibenbremsenvorrichtung, um ein geparktes Auto in der Halteposition zu halten
Disc-brake device for keeping a parked vehicle stationary

(30) Priorité: 25.01.2008 FR 0800413
(43) Date de publication de la demande: 29.07.2009
(73) Titulaire: Robert Bosch GmbH, 70442 Stuttgart (DE)
(72) Inventeur: Boisseau, Jean-Pierre, 75014, PARIS (FR)
(74) Mandataire: Hurwic, Aleksander Wiktor

(56) Documents cités:
- DE-A1- 3 015 838
- FR-A- 2 856 364
- US-A- 3 743 060
- US-A- 3 800 920

## Description

La présente invention concerne un dispositif de frein à disque pour maintenir arrêté un véhicule en stationnement.

On connaît déjà des dispositifs de frein à disque pour maintenir arrêté un véhicule en stationnement tels que par exemple ceux du type décrit dans le document WO02/44582. Un bras qui pivote sous l'action d'un câble relié au frein à main, fait pivoter un plateau mobile de façon à le repousser en direction du disque de frein.

De tels dispositifs ne sont pas prévus pour mettre en place le frein de stationnement en appuyant sur la pédale de frein de service, en d'autre termes en utilisant un fluide hydraulique au lieu d'un câble ou d'un autre moyen mécanique.

L'utilisation d'un fluide hydraulique pour mettre en place un frein de stationnement pose quelques difficultés qui résultent de la dilatation des pièces lors d'un serrage à chaud. Le document US6659236 propose de surmonter ces difficultés au moyen d'un ressort qui se détend progressivement au fur et à mesure du refroidissement. Il faut alors ajouter à la pression de fluide habituelle pour serrer le frein, une pression supplémentaire pour comprimer le ressort de façon que le ressort détendu continue à appliquer une force de même ordre que celle obtenue avec une pression de fluide habituelle au moment du serrage. Cette pression supplémentaire nécessite de sur dimensionner le circuit hydraulique.

Le document DE 30 15 838 A1 montre un dispositif d'après le préambule de la revendication 1.

Pour remédier aux inconvénient de l'état connu de la technique, l'invention a pour objet un dispositif de frein à disque comprenant un piston agencé pour appuyer un patin contre un disque lorsque le piston est soumis à une première force selon un premier axe dans un sens orienté du piston vers le patin. Le dispositif comprend un premier plateau inséré entre une première surface du piston et le patin, et agencé pour générer une deuxième force selon le premier axe dans un sens orienté du patin vers le piston lorsque ledit patin est soumis à un déplacement engendré par une rotation du disque, ladite première surface est traversée par une tige comprenant une extrémité agencée pour suivre le mouvement du piston lorsque ledit piston est soumis à ladite première force selon le premier axe dans un sens orienté du piston vers le patin, et pour être bloquée par une clavette de façon à appuyer le patin contre le disque lorsque ledit piston n'est plus soumis à ladite première force.

C'est alors l'énergie potentielle de déplacement du véhicule qui agit pour resserrer le frein. Aucune source d'énergie supplémentaire interne au système de freinage n'est nécessaire.

Selon le mode de mise en oeuvre choisi, le premier plateau comprend une deuxième surface comprenant au moins une première ligne à distance variable d'un plan parallèle à ladite première surface, et le dispositif comprend un élément agencé pour se déplacer sur ladite ligne de la deuxième surface lorsque ledit patin est soumis à un déplacement engendré par une rotation du disque, de façon à ce que ledit élément se rapproche de ladite première surface ; l'élément est une bille ; un deuxième plateau comprend une troisième surface comprenant au moins une deuxième ligne à distance variable d'un plan parallèle à ladite deuxième surface ; ladite deuxième force est exercée contre ladite extrémité de la tige ou alternativement ladite deuxième force est exercée contre ladite première surface du piston ; ledit premier plateau délimite au moins un espace à frontières obliques de façon à ce qu'un déplacement du patin engendré par une rotation du disque, a tendance à augmenter un écartement entre lesdites frontières obliques ; ladite première force est engendrée par une pression de fluide hydraulique exercée contre le piston ; une rondelle combinée à la tige 11 permet d'entraîner la tige lorsque la rondelle est soumise à ladite première force.

L'invention sera mieux comprise à la lecture de la description qui va suivre, donnée uniquement à titre d'exemple et faite en se référant aux dessins dans desquels :
- la figure 1 comprend à droite, une demi vue de face d'un dispositif de frein à disque et à gauche, une vue en coupe du dispositif de frein ;
- la figure 2 comprend deux demi coupes correspondant chacune à une position différente du dispositif de frein ;
- la figure 3 est une vue en coupe pour une position serrée du dispositif de frein ;
- la figure 4 est une vue en coupe montrant une évolution de serrage dans le temps ;
- la figure 5 est une vue en coupe montrant l'effet technique de l'invention ; et
- la figure 6 est un schéma explicatif de l'invention.

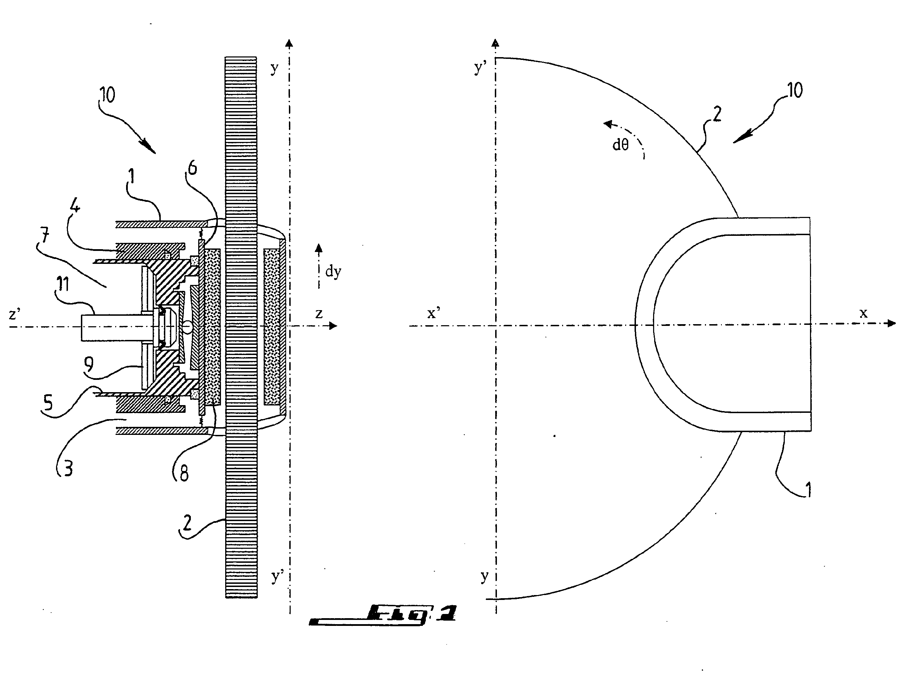

En référence à la figure 1, un dispositif de frein de stationnement à disque pour véhicule automobile, est désigné par la référence générale 10.

L'exemple de la figure 1, correspond à un frein à disque à étrier 1 flottant assurant également la fonction de frein principal de service.

L'étrier 1 est muni d'un alésage borgne 3 dans lequel est logé un cylindre hydraulique 4 contenant un fluide pour appuyer sur un piston 5. Lorsqu'il est soumis à la pression du fluide, le piston 5 vient appuyer sur un segment 6 pour appliquer un patin 8 contre un disque 2.

Sur la vue en coupe à gauche de la figure 1, on note que le piston 5 comprend lui-même une chambre 7 dont les parois latérales coulissent dans le cylindre 4 et dont une face avant est soumise à une première force selon un premier axe z'z, dans un sens orienté du piston vers le patin, et dont le module est égal au produit de la surpression par la section de la chambre 7. L'agencement qui vient d'être décrit permet d'appuyer le patin 8 contre le disque 2 lorsque la surpression par rapport à la pression atmosphérique, dans la chambre 7 est positive.

Comme on peut le voir à l'aide de la demi vue de face du dispositif sur la partie droite de la figure 1, un angle de rotation dθ du disque se traduit par un déplacement dy en projection sur n axe y'y perpendiculaire à l'axe z'z.

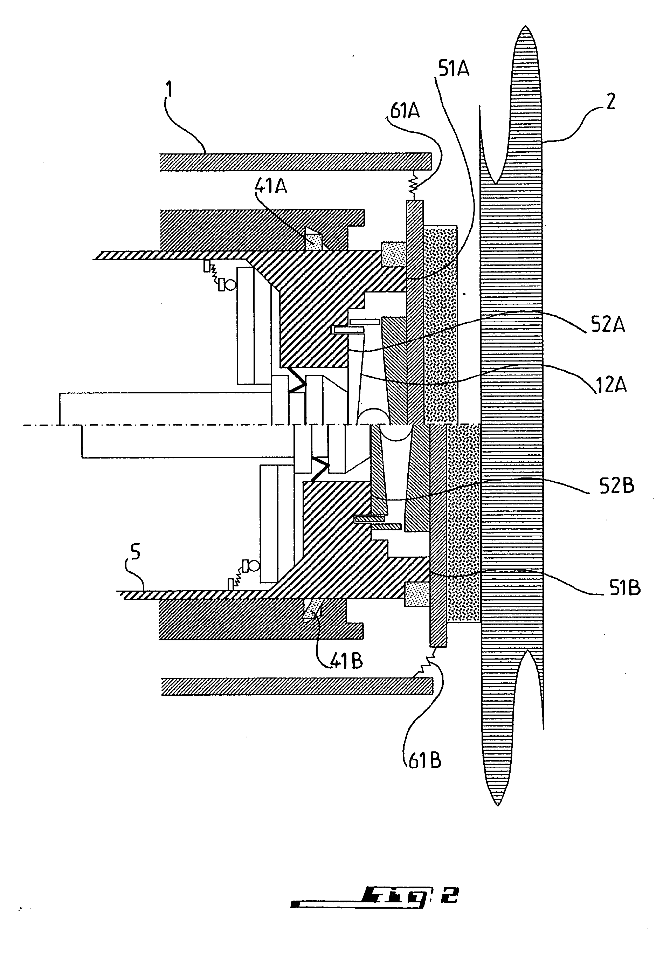

La figure 2 reprend la vue en coupe de la partie gauche de la figure 1 en représentant, dans sa partie supérieure le piston en position initiale, et dans sa partie inférieure le piston en position d'appui en présence d'une surpression dans la chambre 7.

Un joint annulaire souple 41 disposé dans une gorge du cylindre 4, assure un contact étanche avec la paroi latérale du piston 5. Le joint annulaire est repéré 41A en position initiale et 41B en position déformée qui résulte de l'avance du piston.

La face avant du piston 5 comprend une surface annulaire 51, repérée 51A lorsqu'elle est initialement en contact avec le segment 6 sans exercer de pression. La surface annulaire 51 est repérée 51B lorsqu'elle est en contact avec le segment 6 en exerçant de pression.

La face avant du piston 5 comprend aussi une surface annulaire 52 qui, en retrait par rapport à la surface 51, n'est pas en contact avec le segment 6 mais avec une face d'un plateau 12 inséré entre la surface 52 du piston 5 et le patin 8. Une face opposée du plateau 12 définit une surface 121 comprenant une ligne à distance variable d'un plan parallèle à la surface 52. Cette ligne est par exemple la pente d'une rampe qui commence à proximité du plan parallèle à la surface 52 au voisinage de l'axe z'z et qui s'éloigne de ce plan au fur et à mesure qu'on s'éloigne de l'axe z' z. Par exemple encore, cette ligne est la génératrice d'un cône dont le sommet sur l'axe z'z est proche du plan parallèle à la surface 52 et dont la base centrée sur l'axe z'z, est éloignée du plan.

Le segment 6 est fixé sur l'étrier 1 par un moyen élastique 61, repéré 61A en position de repos et 61B en position de travail, en l'occurrence ici allongé pour suivre le déplacement du segment 6 soumis à un effort de pression du piston.

Le joint souple 41 et le moyen élastique 61 exercent une force de rappel lorsqu'une surpression règne dans la chambre 7 de façon à appliquer le patin 8 contre le disque 2. En utilisation de frein de service, c'est-à-dire pour ralentir le véhicule roulant à vitesse non nulle, cette force de rappel ramène le piston en position initiale à disparition de la surpression, supprimant ainsi la force de freinage exercée par le patin 8 sur le disque 2.

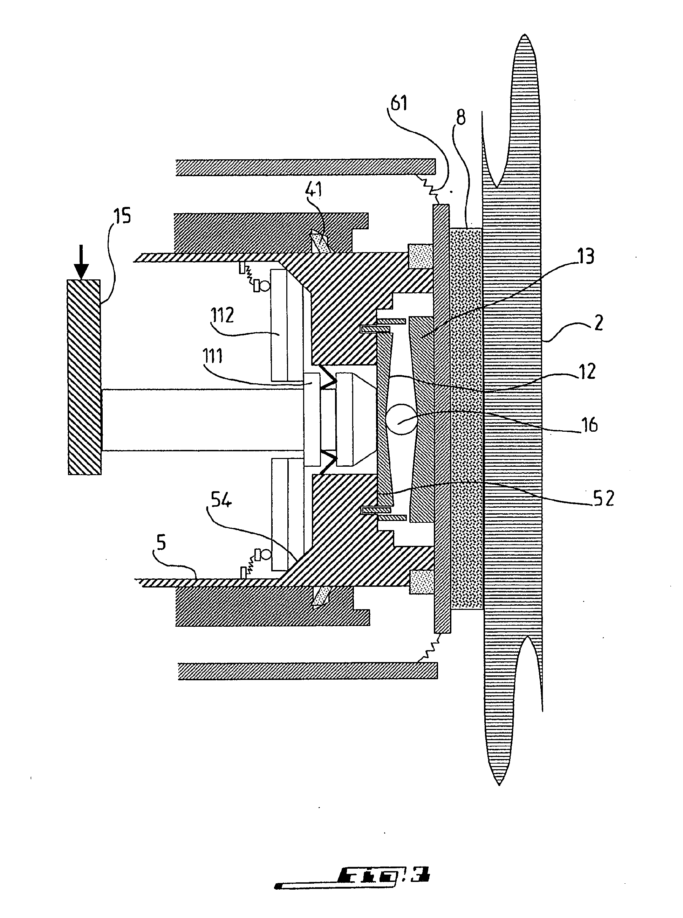

En référence à la figure 3, on a représenté le frein en position serrée, particulièrement véhicule à l'arrêt. On s'intéresse maintenant à une utilisation du dispositif en frein de stationnement. Le véhicule étant à l'arrêt, on applique une surpression dans la chambre 7 par exemple au moyen de la pédale de frein et on actionne une commande, non représentée ici, qui prend en compte une volonté de l'utilisateur d'utiliser la fonctionnalité de frein de stationnement, par exemple en maintenant la pression après relâchement de la pédale de frein ou d'une autre manière. Cependant un maintien de la pression, même exercé sans faille, ne suffit pas toujours à conserver un effort de serrage qui garantit une immobilisation totale du véhicule, par exemple sur une pente importante.

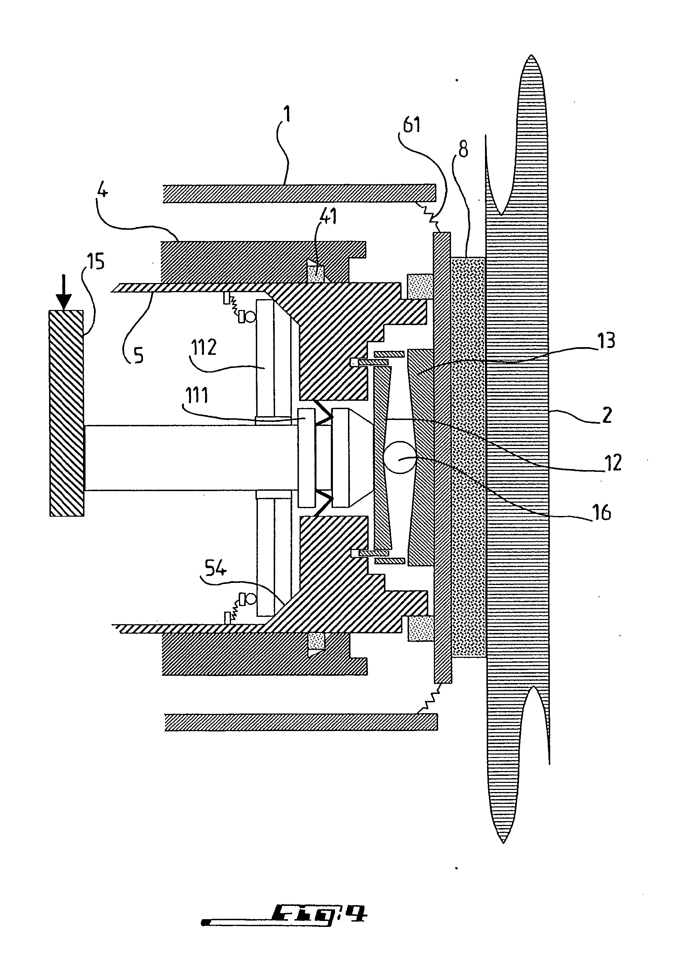

Le phénomène est à présent expliqué en référence à la figure 4. Si le frein est chaud au moment où on le serre en position de stationnement, l'étrier 1, le cylindre 4 et/ou le piston 5, voire le fluide dans la chambre 7, peuvent s'être dilaté sous l'effet de la température. Cette dilatation au moment de la mise en frein de stationnement, est alors une cause qui contribue à un rétrin du piston quand la température redescend.

Ce rétrin est représenté sous forme amplifiée sur la figure 4 où, le patin 8 solidaire du segment 6, étant appliqué contre le disque 2, le rétrin du piston provoque une perte de contact entre la surface 51 et le segment 6. Ceci a pour effet de relâcher la force d'appui du piston 5 sur le segment 6 et par conséquent de relâcher le serrage du patin 8 sur le disque 2. Tant qu'aucune force extérieure, par exemple le poids du véhicule sur une pente ou une poussée d'un autre facteur, n'intervient pour déplacer le véhicule, le phénomène n'est pas gênant. Le phénomène devient gênant si le véhicule se déplace alors que le frein de stationnement est mis en place.

De façon à empêcher le véhicule de se déplacer lorsque le frein de stationnement est mis en place, on agence le plateau 12, inséré entre la surface 52 et le patin 8, pour générer une force selon l'axe z'z dans un sens orienté du patin vers le piston lorsque le patin 8 est soumis à un déplacement engendré par une rotation du disque 2. De cette manière, une surface contre laquelle vient s'appliquer cette force, provoque par réaction un accroissement de l'appui du patin 8 contre le disque 2 qui ré immobilise immédiatement le véhicule.

L'effet d'auto serrage évoqué ci-dessus, est obtenu par un élément 16 agencé pour se déplacer sur la ligne de la surface 121 lorsque le patin 8 est soumis à un déplacement engendré par une rotation du disque 2. La ligne de la surface 121 commençant à proximité du plan parallèle à la surface 52 au voisinage de l'axe z'z et s'éloignant de ce plan au fur et à mesure qu'on s'éloigne de l'axe z' z, provoque un pincement sur l'élément 16 si, par exemple, l'élément 16 suit le mouvement infinitésimal du patin 8.

On peut aussi obtenir un effet d'auto serrage avec un plateau 13 inséré entre la surface 52 du piston 5 et le patin 8, avec une première face du plateau 13 solidaire du segment 6 et une deuxième face, opposée à la première face qui définit une surface 131 comprenant une ligne à distance variable du plan parallèle à la surface 52, de géométrie semblable à celle de la surface 121.

L'élément 16 est alors agencé pour se déplacer sur la ligne de la surface 131 lorsque le patin 8 est soumis à un déplacement engendré par une rotation du disque 2, sans suivre nécessairement le mouvement du patin 8, car c'est alors la surface 131 qui suit le mouvement infinitésimal du patin 8.

Une utilisation combinée des plateaux 12 et 13, permet de prendre une bille pour remplir les fonctionnalités de l'élément 16. L'avantage d'une bille, prisonnière dans le creux présent entre les deux plateaux mais libre en rotation, est de favoriser un pincement sans glissement. Une diminution des frottements est utile à une diminution d'usure des pièces.

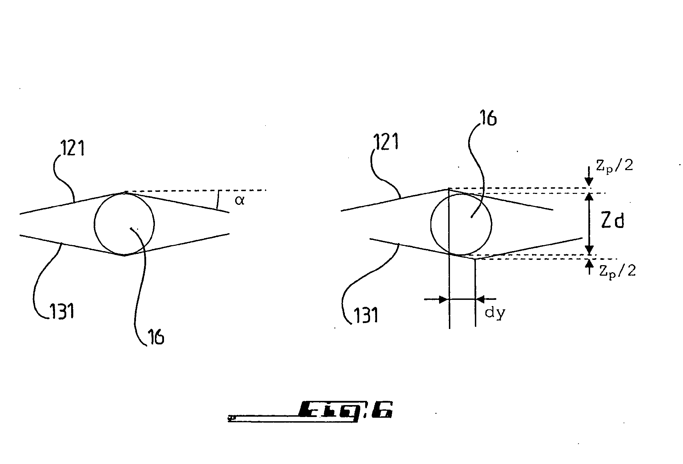

En référence à la figure 6, la partie gauche représente l'élément 16 sous forme de bille, initialement prisonnière entre les surfaces 121 et 131 qui définissent un écart de valeur Z_{d} sensiblement égale au diamètre de la bille. Lorsque les surfaces 121 et 131 se décalent l'une par rapport à l'autre, on voit sur la partie droite de la figure 6, une augmentation Zₚ de l'écart telle que Zₚ = dy·tangα où α est l'angle de la pente de la surface 121 supposée égale à l'angle de la pente 122.

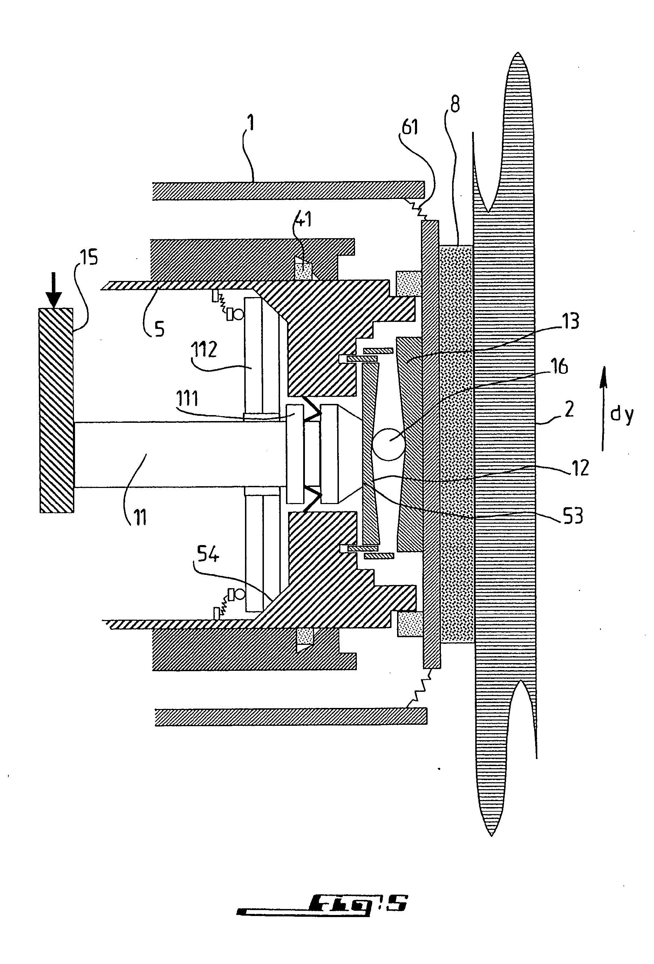

En référence à la figure 5, un déplacement infinitésimal dy du patin 8 entraîné par les forces de freinage sur le disque 2, provoque un déplacement similaire du plateau 13, vers le haut dans le cas illustré par la figure 5. L'effet technique qui vient d'être expliqué en référence à la figure 6, force le plateau 12 contre une extrémité 53 de tige 11 qui, par réaction, augmente la pression d'application du patin 8 contre le disque 2 et bloque à nouveau le véhicule malgré le rétrin du cylindre 5. En fait, le rétrin du cylindre 5 étant progressif avec la baisse de température et la faible compressibilité des pièces qui résulte de leur constitution métallique, fait qu'un déplacement imperceptible dy provoque quasi immédiatement un reblocage du disque. Nous expliquerons les fonctionnalités de la tige 11 en revenant à la figure 3.

En absence de tige 11, l'effet technique qui a été expliqué en référence à la figure 6, force le plateau 12 contre la surface 52 qui par réaction augmente la pression d'application du patin 8 contre le disque 2 et bloque à nouveau le véhicule malgré le rétrin du cylindre 5, dans la mesure où le rétrin du piston 5 n'est pas trop important.

Revenant à la figure 3, la surface 52 est traversée par une tige 11 comprenant une extrémité 53 agencée pour suivre le mouvement du piston 5 lorsque le piston est soumis à la force selon l'axe z'z qui est engendrée par une pression de fluide hydraulique exercée contre le piston. La tige 11 comprend une collerette 111 sur laquelle vient appuyer une rondelle 9 percée en son centre avec un diamètre qui permet de faire passer la tige 11 mais pas la collerette 111. La rondelle 9 est appliquée par ailleurs contre une face 54 du piston 5, intérieure à la chambre 7 de sorte qu'une augmentation de pression dans la chambre 7, provoque un déplacement identique du piston 5 et de la tige 11, particulièrement de son extrémité 53, dans un sens orienté du piston vers le patin.

Une clavette 15 permet ensuite de bloquer la tige 11 de façon à appuyer le patin 8 contre le disque 2 lorsque le piston n'est plus soumis à la totalité de la force générée par surpression de fluide hydraulique.

Ainsi comme on le voit sur la figure 4, même si une baisse de pression dans la chambre 7, provoque un rétrin du piston, l'extrémité 53 de la tige 11, continue à appliquer le patin 8 contre le disque 2.

Comme on peut le voir sur la figure 5, même si la tige 11 avait subi une dilatation lors de la mise en position de la clavette 15 pour remplir la fonction de frein de stationnement, l'espace à frontières obliques délimité par le plateau 12 et mieux encore, avec le plateau 13, contient au moins une section d'écartement égal au diamètre de l'élément 16 sous forme de bille. De cette manière, lorsqu'un déplacement du patin engendré par une rotation du disque 2, entraîne un déplacement du segment 6 et par conséquent de l'une des frontières obliques par rapport à l'autre, ce déplacement des frontières obliques a tendance à augmenter un écartement entre elles. Cette augmentation d'écartement recrée la pression de contact de l'extrémité 53 de tige 11 contre le plateau 12 et par répercussion successive, du patin 8 contre le disque 2.

## Revendications

1. Dispositif de frein à disque comprenant un piston (5) agencé pour appuyer un patin (8) contre un disque (2) lorsque ledit piston est soumis à une première force selon un premier axe (z'z) dans un sens orienté du piston vers le patin, le dispositif comprenant un premier plateau (12, 13) inséré entre une première surface (52) du piston (5) et ledit patin (8), et agencé pour générer une deuxième force selon ledit premier axe (z'z) dans un sens orienté du patin vers le piston lorsque ledit patin (8) est soumis à un déplacement engendré par une rotation du disque (2) **caractérisé en ce que** ladite première surface (52) est traversée par une tige (11) comprenant une extrémité (53) agencée pour suivre le mouvement du piston (5) lorsque ledit piston est soumis à ladite première force selon le premier axe (z'z) dans un sens orienté du piston vers le patin, et pour être bloquée par une clavette (15) de façon à appuyer le patin (8) contre le disque (2) lorsque ledit piston n'est plus soumis à ladite première force.

2. Dispositif selon la revendication 1, **caractérisé en ce que** ledit premier plateau (12, 13) comprend une deuxième surface (121, 131) comprenant au moins une première ligne à distance variable d'un plan parallèle à ladite première surface (52), et **en ce que** le dispositif comprend un élément (16) agencé pour se déplacer sur ladite ligne de la deuxième surface lorsque ledit patin (8) est soumis à un déplacement engendré par une rotation du disque (2), de façon à ce que ledit élément (16) se rapproche de ladite première surface.

3. Dispositif selon la revendication 2, **caractérisé en ce que** ledit élément (16) est une bille.

4. Dispositif selon l'une des revendications 2 ou 3, **caractérisé en ce qu'**il comprend un deuxième plateau (13, 12) qui comprend une troisième surface (131, 121) comprenant au moins une deuxième ligne à distance variable d'un plan parallèle à ladite deuxième surface (121, 131).

5. Dispositif selon la revendication 1, **caractérisé en ce que** ladite deuxième force est exercée contre ladite extrémité de la tige (11).

6. Dispositif selon l'une des revendications 1 à 4, **caractérisé en ce que** ladite deuxième force est exercée contre ladite première surface (52) du piston (5).

7. Dispositif selon l'une des revendications précédentes, **caractérisé en ce que** ledit premier plateau délimite au moins un espace à frontières obliques de façon à ce qu'un déplacement du patin engendré par une rotation du disque (2), a tendance à augmenter un écartement entre lesdites frontières obliques.

8. Dispositif selon l'une des revendications précédentes, **caractérisée en ce que** ladite première force est engendrée par une pression de fluide hydraulique exercée contre le piston.

9. Dispositif selon l'une des revendications 1 ou 5, **caractérisé en ce qu'**il comprend une rondelle (9) combinée à la tige (11) de façon à entraîner la tige (11) lorsque la rondelle (9) est soumise à ladite première force.

## Claims

1. Disk brake device comprising a piston (5) designed to press a pad (8) against a disk (2) when said piston is subjected to a first force along a first axis (z'z) in a direction directed from the piston toward the pad, the device comprising a first plate (12, 13) inserted between a first surface (52) of the piston (5) and said pad (8) and designed to generate a second force along said first axis (z'z) in a direction directed from the pad toward the piston when said pad (8) is caused to move as a result of rotation of the disk (2) **characterized in that** the surface (52) has, passing through it, a rod (11) that has an end (53) designed to follow the movement of the piston (5) when said piston is subjected to said first force along the first axis (z'z) in a direction oriented from a piston toward the pad, and to be immobilized by a key (15) so as to press the pad (8) against the disk (2) when said piston is no longer subjected to said first force.

2. Disk brake device according to Claim 1, **characterized in that** said first plate (12, 13) comprises a second surface (121, 131) comprising at least one first line a variable distance away from a plane parallel to said first surface (52), and **in that** the device comprises an element (16) designed to move along said line of the second surface when said pad (8) is made to move as a result of rotation of the disk (2) so that said element (16) moves closer to said first surface.

3. Device according to Claim 2, **characterized in that** said element (16) is a ball.

4. Device according to one of Claims 2 and 3, **characterized in that** it comprises a second plate (13, 12) which comprises a third surface (131, 121) comprising at least one second line a variable distance from a plane parallel to said second surface (121, 131).

5. Device according to Claim 1, **characterized in that** said second force is applied against said end of the rod (11).

6. Device according to one of Claims 1 to 4, **characterized in that** said second force is applied against said first surface (52) of the piston (5).

7. Device according to one of the preceding claims, **characterized in that** said first plate delimits at least one space with oblique boundaries such that pad movement caused by the rotation of the disk (2) tends to increase the separation between said oblique boundaries.

8. Device according to one of the preceding claims, **characterized in that** said first force is generated by hydraulic fluid pressure applied to the piston.

9. Device according to one of Claims 1 and 5, **characterized in that** it comprises a washer (9) combined with the rod (11) so as to drive the rod (11) when the washer (9) is subjected to said first force.

## Patentansprüche

1. Scheibenbremsvorrichtung mit einem Kolben (5), der so angeordnet ist, dass ein Bremsbelagträger (8) gegen eine Scheibe (2) gedrückt wird, wenn der Kolben einer ersten Kraft gemäß einer ersten Achse (z'z) in einer Richtung, die vom Kolben zum Bremsbelagträger ausgerichtet ist, ausgesetzt ist, wobei die Vorrichtung eine erste Platte (12, 13) aufweist, die zwischen einer ersten Fläche (52) des Kolbens (5) und dem Bremsbelagträger (8) eingesetzt und so angeordnet ist, dass sie eine zweite Kraft gemäß der ersten Achse (z'z) in einer Richtung erzeugt, die vom Bremsbelagträger zum Kolben ausgerichtet ist, wenn der Bremsbelagträger (8) einer durch eine Drehung der Scheibe (2) hervorgerufenen Verschiebung ausgesetzt ist, **dadurch gekennzeichnet, dass** die erste Fläche (52) von einer Stange (11) mit einem Ende (53) durchquert ist, das so angeordnet ist, dass es der Bewegung des Kolbens (5) folgt, wenn der Kolben der ersten Kraft gemäß der ersten Achse (z'z) in eine Richtung ausgesetzt ist, die vom Kolben zum Bremsbelagträger ausgerichtet ist, und von einem Keil (15) blockiert ist, so dass der Bremsbelagträger (8) gegen die Scheibe (2) gedrückt wird, wenn der Kolben nicht mehr der ersten Kraft ausgesetzt ist.

2. Vorrichtung nach Anspruch 1, **dadurch gekennzeichnet, dass** die erste Platte (12, 13) eine zweite Fläche (121, 131) mit mindestens einer ersten Linie mit variablem Abstand zu einer Ebene aufweist, die parallel zur ersten Fläche (52) verläuft, und die Vorrichtung ein Element (16) aufweist, das so angeordnet ist, dass es sich auf der Linie der zweiten Fläche verlagert, wenn der Bremsbelagträger (8) einer durch eine Drehung der Scheibe (2) hervorgerufenen Verschiebung ausgesetzt ist, so dass sich das Element (16) der ersten Fläche nähert.

3. Vorrichtung nach Anspruch 2, **dadurch gekennzeichnet, dass** das Element (16) eine Kugel ist.

4. Vorrichtung nach einem der Ansprüche 2 oder 3, **dadurch gekennzeichnet, dass** sie eine zweite Platte (13, 12) mit einer dritten Fläche (131, 121) aufweist, die mindestens eine zweite Linie mit variablem Abstand zu einer zur zweiten Fläche (121, 131) parallelen Ebene aufweist.

5. Vorrichtung nach Anspruch 1, **dadurch gekennzeichnet, dass** die zweite Kraft gegen das Ende der Stange (11) ausgeübt wird.

6. Vorrichtung nach einem der Ansprüche 1 bis 4, **dadurch gekennzeichnet, dass** die zweite Kraft gegen die erste Fläche (52) des Kolbens (5) ausgeübt wird.

7. Vorrichtung nach einem der vorhergehenden Ansprüche, **dadurch gekennzeichnet, dass** die erste Platte mindestens einen Raum mit schrägen Begrenzungen begrenzt, so dass eine durch eine Drehung der Scheibe (2) hervorgerufene Verschiebung des Bremsbelagträgers dazu neigt, einen Abstand zwischen den schrägen Begrenzungen zu vergrößern.

8. Vorrichtung nach einem der vorhergehenden Ansprüche, **dadurch gekennzeichnet, dass** die erste Kraft durch einen gegen den Kolben ausgeübten Hydraulikfluiddruck hervorgerufen wird.

9. Vorrichtung nach einem der Ansprüche 1 oder 5, **dadurch gekennzeichnet, dass** sie eine mit der Stange (11) verbundene Scheibe (9) aufweist, so dass die Stange (11) mitgenommen wird, wenn die Scheibe (9) der ersten Kraft ausgesetzt ist.
